# EUROPÄISCHE PATENTSCHRIFT

(11) **EP 2 092 134 B1**
(45) Veröffentlichungstag und Bekanntmachung des Hinweises auf die Patenterteilung: **29.04.2015**
(21) Anmeldenummer: 07846574.7
(22) Anmeldetag: 14.11.2007
(51) Int. Cl.: E04C 2/04, E04C 2/52, F24D 3/14, E04F 13/08

(54) **WANDELEMENT FÜR EINE TEMPERIERWAND ZUM TEMPERIEREN VON RÄUMEN**
WALL ELEMENT FOR A TEMPERING WALL FOR THE TEMPERATURE CONTROL OF ROOMS
ELÉMENT DE PAROI POUR UNE PAROI À RÉGULATION THERMIQUE DESTINÉ À TEMPÉRER DES PIÈCES

(30) Priorität: 01.12.2006 DE 102006056730
(43) Veröffentlichungstag der Anmeldung: 26.08.2009
(73) Patentinhaber: Rehau AG + Co, 95111 Rehau (DE)
(72) Erfinder: KRÖBER, Carsten, 90765 Fürth (DE); KOCH, Klaus, Paul, 90513 Zirndorf (DE)
(86) Internationale Anmeldenummer: PCT/EP2007/009820
(87) Internationale Veröffentlichungsnummer: WO 2008/064770

(56) Entgegenhaltungen:
- DE-A1- 10 310 673
- DE-B3-102005 005 385
- DE-U1-202004 001 583
- DE-U1-202004 001 595
- DE-U1-202004 002 089
- GB-A- 2 298 914

## Beschreibung

Die Erfindung betrifft ein Wandelement für eine Temperierwand zum Temperieren von Räumen nach dem Oberbegriff des Anspruchs 1.

Derartige Wandelemente sind bekannt aus der DE 10 2005 005 385 B3, der DE 20 2004 001 583 U1 und der DE 20 2004 001 595 U1. Bei den dort beschriebenen Wandelementen wird nach der Einbringung des Leitungselements in die Nut auf die nutseitige Trägerschicht vollflächig eine Kaschierung aufgebracht, die aus Papier, Vlies oder Gewebe bestehen kann. Beim Trocknen dieser aufkaschierten Schicht zieht sich diese bei den in der Praxis für die Kaschierung verwendeten Materialien zusammen und verkürzt sich. Hierdurch entstehen Spannungen, die zu einer unerwünschten Wölbung der Platte führen. Bei der Montage eines derart gewölbten Wandelements kann es zu Plattenbrüchen und insbesondere zu einem erhöhten Verspachtelungsaufwand der Fugen bzw. der Oberflächen kommen.

Darüber hinaus beschreibt die deutsche Patentanmeldung DE 103 10 673 A1 eine Renovations-, Ausbau- und Klimatisierungsplatte aus einer Gipskarton-, Faserstoff- oder ähnlichen Materialplatte, in die Nuten eingebracht wurden, in denen dann ein Rohr eingelegt ist, wobei nach dem Einlegen des Rohres die Platte vollflächig oder teilflächig mit einem Netz, Gewebe, einer Folie, einem Kraftpapier oder ähnlichem Material kaschiert bzw. beklebt wird, und zwar von der Seite aus, von der das Rohr eingelegt wurde. Gemäß Fig. 1 der DE 103 10 673 A1 wird durch das aufkaschierte bzw. aufgeklebte Material weniger als die Hälfte der Materialplatte überdeckt, wobei sich das aufkaschierte bzw. aufgeklebte Material von einer Längsseite der Materialplatte bis zu einer gegenüberliegenden Längsseite der Materialplatte erstreckt.

Es ist eine Aufgabe der vorliegenden Erfindung, ein Wandelement der eingangs genannten Art derart weiterzubilden, dass eine Wölbung der Trägerschicht nach dem Aufbringen der Deckschicht zumindest weitgehend verhindert ist.

Diese Aufgabe ist erfindungsgemäß gelöst durch ein Wandelement mit den im Kennzeichnungsteil des Anspruchs 1 angegebenen Merkmalen.

Erfindungsgemäß wurde erkannt, dass die Stabilisierungsfunktion der Deckschicht auch dann erreicht ist, wenn diese nicht vollflächig, sondern in Form mindestens eines Deckschichtstreifens aufgebracht wird, der weniger als die Hälfte der Trägerschicht überdeckt und somit auftretende Oberflächenspannungen deutlich reduziert. Der Deckschichtstreifen erhöht die Stabilität der Trägerschicht auf der eingefrästen Seite, so dass das Wandelement ohne besondere Vorsicht gehandhabt werden kann. Die Deckschicht kann auf die Trägerschicht insbesondere aufkaschiert sein. Wenn sich dann der Deckschichtstreifen beim Trocknen der Kaschierung zusammenzieht, können längs der Längsseite des Wandelements auftretende Oberflächenspannungen nicht längs der gesamten Länge des Wandelements wirksam werden. Dies vermeidet in der Praxis eine kritische Wandelementdurchbiegung um eine zu dessen Längsseite senkrechte Achse. Darüber hinaus führen mindestens zwei voneinander getrennte Deckschichtstreifen zu einer unkritischen Verteilung auftretender Restoberflächenspannungen, so dass auch relativ hohe Deckschichtabdeckungen erzielt werden können, ohne dass hierbei eine kritische Wölbung des Wandelements resultiert.

Auch eine Wölbung um eine senkrecht hierzu verlaufende, also parallel zur Längsachse verlaufende, Achse ist verringert, da der mindestens eine Deckschichtstreifen nicht längs der gesamten Längsseite der Trägerschicht angebracht ist. Im Vergleich zu den gattungsgemäßen Wandelementen resultiert ein wesentlich ebeneres Wandelement, welches in der Praxis nicht oder kaum gewölbt ist. Eine aus derartigen Wandelementen aufgebaute Temperierwand hat eine praktisch ebene Wandansicht. Da die Wandelemente praktisch eben sind, können sie einfach durch Stapelung gelagert werden. Da auf eine vollflächige Aufbringung der Deckschicht verzichtet wird, spart dies Deckschicht und, falls die Deckschicht mit der Trägerschicht verklebt wird, Kleber. Das praktisch ebene Wandelement kann zudem gut gehandhabt werden.

Bei einer Deckschichtstreifenanbringung nach Anspruch 2 ist die Längsseite der Trägerschicht, über die höhere Oberflächenspannungen bei der Aufbringung der Deckschicht wirken können, nicht vollständig von der Deckschicht abgedeckt. Damit wird die in der Regel kritischere Wölbung der Längsseite des Wandelements verringert oder sogar gänzlich verhindert.

Mehr als zwei Deckschichtstreifen nach Anspruch 3 haben insbesondere bei Wandelementen mit einem hohen Aspektverhältnis entsprechende Vorteile.

Mehr als zwei Deckschichtstreifen nach Anspruch 3 haben insbesondere bei Wandelementen mit einem hohen Aspektverhältnis entsprechende Vorteile.

Im Bereich der einander gegenüberliegenden Abschlussabschnitte der Längsseiten, also randseitig, angeordnete Deckschichtstreifen nach Anspruch 4 schützen die Trägerschicht zusätzlich dort, wo sie bei der Handhabung mechanisch am ehesten beansprucht wird.

Mindestens eine Verstärkungsleiste nach Anspruch 5 führt zu einer zusätzlichen Verstärkung des Wandelements längs der Verstärkungsleiste, so dass in Längsrichtung der Verstärkungsleiste eine Durchbiegung bzw. Wölbung des Wandelements vermindert bzw. verhindert ist.

Ausführungsbeispiele der Erfindung werden nachfolgend anhand der Zeichnung näher erläutert. In dieser zeigen:
- Fig. 1: von einer Gebäudewand her gesehen eine Aufsicht auf ein Wandelement für eine Temperierwand zum Temperieren von Räumen;
- Fig. 2: einen Schnitt gemäß Linie II-I in Fig. 1;
- Fig. 3: eine Ausschnittsvergrößerung von Fig. 2;
- Fig. 4: einen Schnitt gemäß Linie IV-IV in Fig. 1;
- Fig. 5: eine zu Fig. 1 ähnliche Ansicht einer weiteren Ausführung eines Wandelements;
- Fig. 6: einen Schnitt gemäß Linie VI-VI in Fig. 5;
- Fig. 7: eine zu Fig. 1 ähnliche Aufsicht einer weiteren Ausführung eines Wandelements;
- Fig. 8: einen Schnitt gemäß Linie VIII-VIII in Fig. 7;
- Fig. 9: eine Ausschnittsvergrößerung aus Fig. 8;
- Fig. 10: einen Schnitt gemäß Linie X-X in Fig. 7;
- Fig. 11: eine zu Fig. 7 ähnliche Aufsicht einer weiteren Ausführung eines Wandelements; und
- Fig. 12: einen Schnitt gemäß Linie XII-XII in Fig. 11.

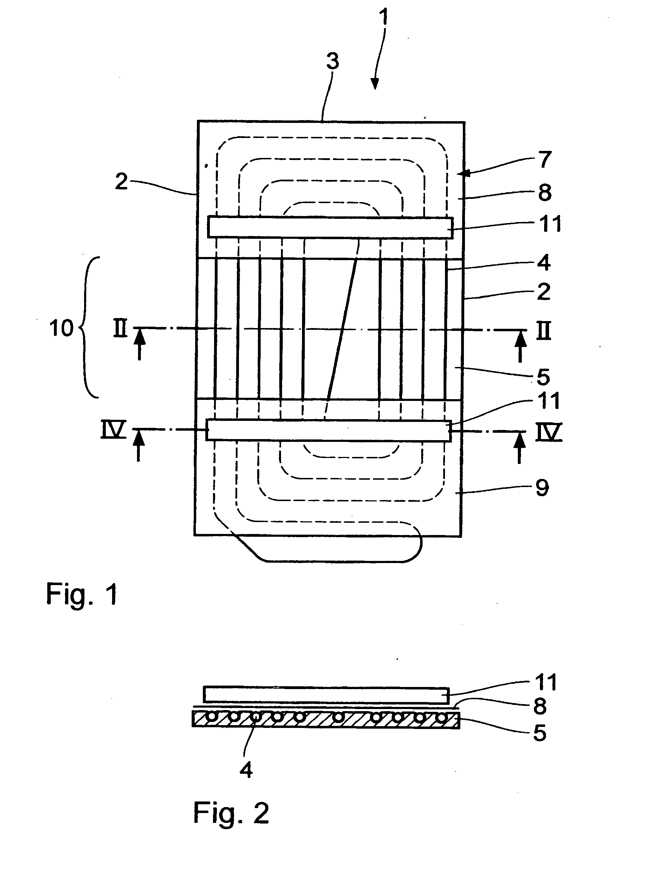

Ein Wandelement 1, von dem in den Fig. 1 bis 4 eine erste Ausführung dargestellt ist, ist Bestandteil einer in Trockenbauweise hergestellten Temperierwand zum Temperieren, also zum Heizen oder Kühlen, von Räumen. Das Wandelement 1 ist rechteckig und hat eine längere Längsseite 2 mit einer Länge von 1000 mm und eine kürzere Breitseite 3 mit einer Länge von 600 mm. Das Wandelement 1 hat ein Leitungselement 4 zur Aufnahme eines Temperierfluids, z. B. zur Leitung von Heiz- oder Kühlwasser. Beim Leitungselement 4 handelt es sich um ein Kunststoffrohr aus vernetztem Polyethylen (PE-Xa). Das Leitungselement 4 hat einen Außendurchmesser von 10,1 mm und eine Wandstärke von 1,1 mm.

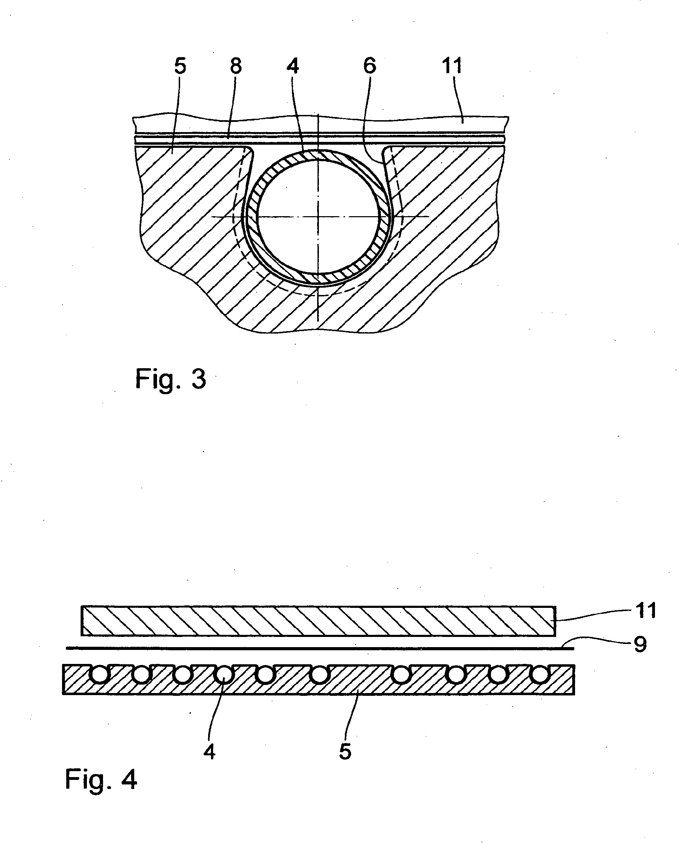

Das Wandelement 1 hat eine Trägerschicht 5 zur Aufnahme des Leitungselements 4. Letzteres ist dabei in einer Ω-förmigen Nut 6 der Trägerschicht 5 eingelegt. Die Trägerschicht 5 ist als Gipskartonplatte ausgeführt. Der Querschnitt der Nut 6 ist in der Ausschnittsvergrößerung der Fig. 3 dargestellt. Die Nut 6 gibt den Verlauf des Leitungselements 4 in der Trägerschicht 5 vor. Die Nut 6 ist in die Trägerschicht 5 von der Seite her eingefräst, die im verbauten Zustand des Wandelements 1 vom Rauminneren abgewandt ist. Auf dieser dem Raum abgewandten Seite der Trägerschicht 5 ist eine Deckschicht 7 zur Abdeckung der Nut 6 angeordnet. Die Deckschicht 7 hat bei der Ausführung nach den Fig. 1 bis 4 zwei Deckschichtstreifen 8, 9, die von einer Längsseite 2 der Trägerschicht 5 bis zur gegenüberliegenden Längsseite 2 der Trägerschicht 5 reichen. Jeder der Deckschichtstreifen 8, 9 deckt, für sich gesehen, weniger als die Hälfte der gesamten Trägerschicht 5 ab. Die Deckschicht 7 bedeckt insgesamt einen Bruchteil der Fläche der Trägerschicht 5, bedeckt also nicht die gesamte Trägerschicht 5. Die Deckschichtstreifen 8, 9 sind in der Fig. 1 so dargestellt, dass darunter liegende Details des Wandelements 1 angedeutet sind. In der Praxis sind die Deckschichtstreifen 8, 9 in der Regel natürlich nicht transparent.

Bei den Deckschichtstreifen 8, 9 handelt es sich um eine durch Kaschierung aufgebrachte Papierbeschichtung. Letztere hat ein Flächengewicht von mindestens 180 g/m². Die beiden Deckschichtstreifen 8, 9 sind voneinander getrennt und durch einen deckschichtfreien Trägerschichtabschnitt 10 voneinander beabstandet. Die beiden Deckschichtstreifen 8, 9 und der deckschichtfreie Trägerschichtabschnitt 10 überdecken jeweils etwa ein Drittel der Länge der Trägerschicht 5. Die beiden Deckschichtstreifen 8, 9 sind auf den einander gegenüberliegenden Abschlussabschnitten der Längsseiten 2 der Trägerschicht 5 angeordnet. Auf der von der Trägerschicht 5 abgewandten Seite der Deckschichtstreifen 8, 9 ist jeweils eine Verstärkungsleiste 11 angebracht. Bei der Verstärkungsleiste 11 handelt es sich um einen aufkaschierten Gipskartonstreifen mit einem Querschnitt senkrecht zu seiner Längserstreckung von 15 mm x 15 mm. Die Verstärkungsleisten 11 sind parallel zu den Breitseiten 3 des Wandelements 1 benachbart zum deckschichtfreien Trägerabschnitt 10 angebracht. Die Länge der Verstärkungsleisten 11 ist etwas kürzer als die Breite des Wandelements 1, wobei die Verstärkungsleisten 11 zentriert angeordnet sind, so dass zwischen den Enden der Verstärkungsleisten 11 und den Längsseiten 2 ein kurzer Zwischenraum verbleibt.

Das Wandelement 1 wird folgendermaßen gefertigt: Zunächst wird in die Trägerschicht 5 die mäanderförmig verlaufende Ω-Nut 6 eingefräst. Dann wird das Leitungselement 4 in die Nut 6 eingelegt. Das Kunststoffrohr kann hierzu, damit es sich beim Einlegen in die Nut 6 leicht deformieren lässt, in einem Wasserbad vorgewärmt werden. Nach dem Einlegen des Leitungselements 4 wird durch eine Prüfung sichergestellt, dass es nicht nach oben über die Trägerschicht 5 übersteht. Nun werden die Deckschichtstreifen 8, 9 und die Verstärkungsleisten 11 aufkaschiert. Die Verstärkungsleisten 11 verhindern, dass sich beim Trocknen der Deckschichtstreifen 8, 9 eine Wölbung der Trägerschicht 5 um eine parallel zu den Längsseiten 2 verlaufende Achse einstellt. Aufgrund des deckschichtfreien Trägerschichtabschnitts 10 ist wiederum verhindert, dass sich das Wandelement 1 in einer hierzu senkrechten Richtung, also um eine parallel zur Breitseite 3 verlaufende Achse wölbt. Nach erfolgter Trocknung der Kaschierung liegt somit ein praktisch vollkommen planes Wandelement 1 vor, das einerseits ohne größere Vorsicht transportiert werden kann, da die Deckschichtstreifen 8, 9 und die Verstärkungsleisten 11 eine Bruchgefahr der gefrästen Trägerschicht 5 verhindern, und dass andererseits ohne großen Aufwand beim Oberflächenfinish zum Aufbau der Temperierwand genutzt werden kann. Die Verstärkungsleisten 11 dienen zudem beim Stapeln von Wandelementen 1 als Abstandshalter zwischen den beschichteten Trägerschichten 5, so dass eine Beschädigung sowohl der Trägerschichten 5 als auch der Deckschichtstreifen 8, 9 in gestapeltem Zustand verhindert ist.

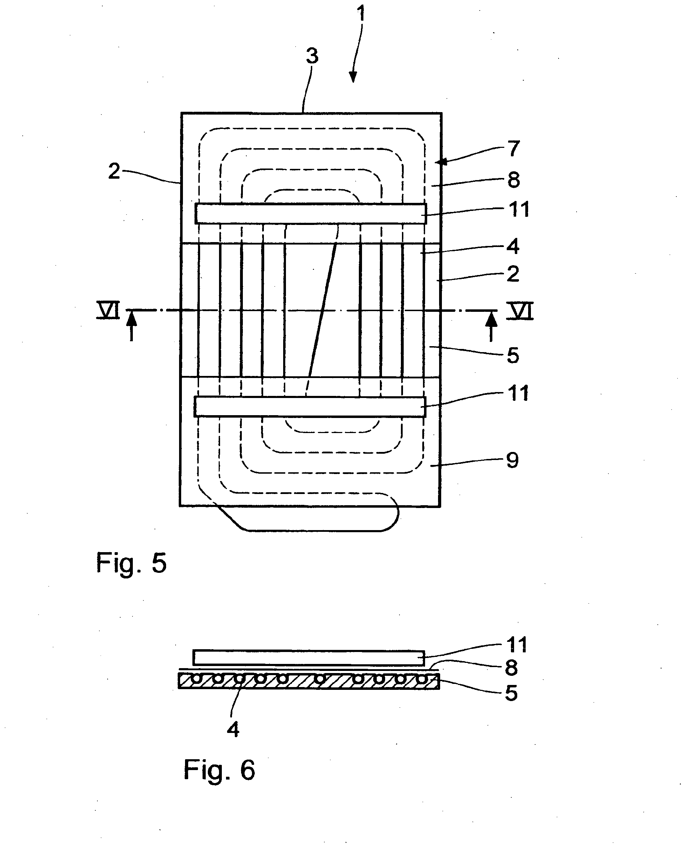

Fig. 5 und 6 zeigen eine weitere Ausführung eines Wandelements 1. Komponenten, die denjenigen entsprechen, die vorstehend schon unter Bezugnahme auf die Ausführung nach den Fig. 1 bis 4 erläutert wurden, tragen die gleichen Bezugsziffern und werden nicht nochmals im Einzelnen erläutert.

Die Ausführung nach den Fig. 5 und 6 unterscheidet sich von derjenigen nach den Fig. 1 bis 4 ausschließlich durch ihre Breite, die bei der Ausführung nach den Fig. 5 und 6 620 mm beträgt. Entsprechend sind die Trägerschicht 5, die Deckschichtstreifen 8, 9 und die Verstärkungsleisten 11 verbreitert. Benachbarte Leitungsabschnitte des Leitungselements 4 sind beim Wandelement 1 nach den Fig. 5 und 6 im Vergleich zu den Leitungsabschnitten nach den Fig. 1 bis 4 im zentralen Mäanderbereich des Leitungselements 4 etwas weiter zueinander beabstandet.

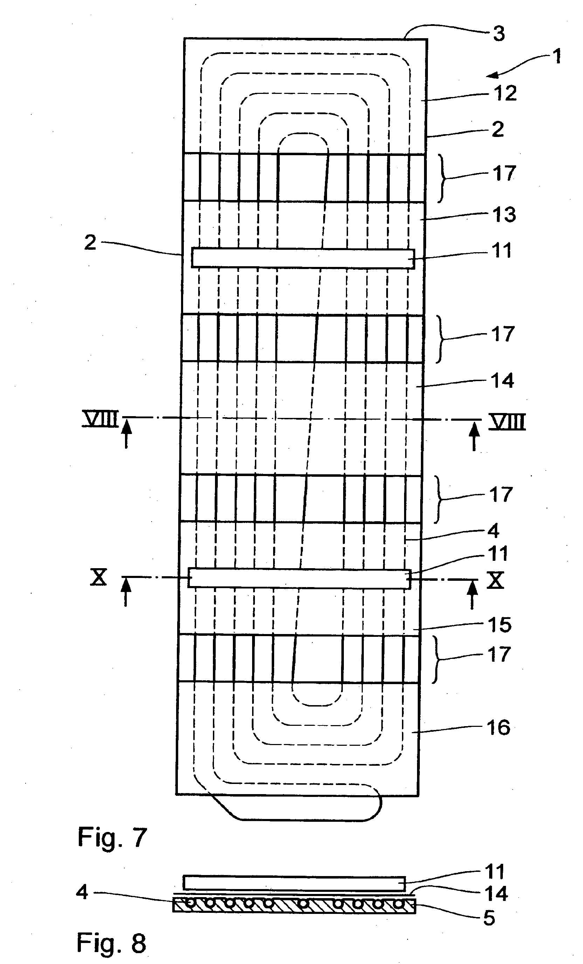

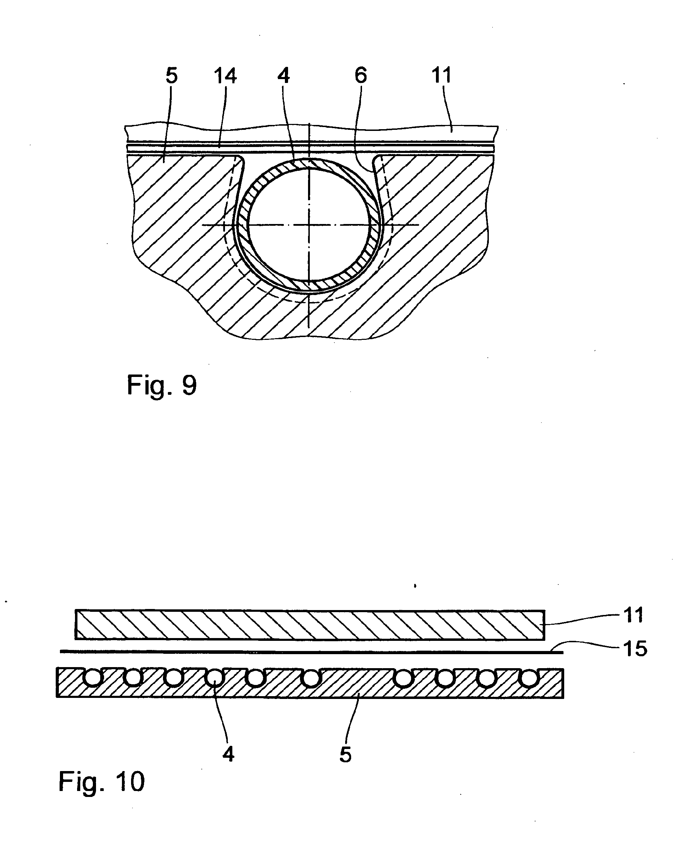

Fig. 7 bis 10 zeigen eine weitere Ausführung eines Wandelements 1. Komponenten, die denjenigen entsprechen, die vorstehend schon unter Bezugnahme auf die Ausführungen nach den Fig. 1 bis 6 erläutert wurden, tragen die gleichen Bezugsziffern und werden nicht nochmals im Einzelnen diskutiert.

Das Wandelement nach den Fig. 7 bis 10 hat eine Länge von 2000 mm und eine Breite von 600 mm. Insgesamt hat das Wandelement 1 nach den Fig. 7 bis 10 fünf Deckschichtstreifen 12 bis 16, die in der Fig. 7 von oben nach unten durchnummeriert sind. Jeder Deckschichtstreifen 12 bis 16 überdeckt die gesamte Breite der Trägerschicht 5 und hat rechteckige Abmessungen von 600 mm x 300 mm. Zwischen benachbarten Deckschichtstreifen 12 bis 16 verbleibt jeweils ein deckschichtfreier Trägerschichtabschnitt 17, der sich über die gesamte Breite der Trägerschicht 5 erstreckt und senkrecht hierzu eine Ausdehnung von 125 mm hat. Die beiden Deckschichtstreifen 12 und 16 sind auf den einander gegenüberliegenden Abschlussabschnitten der Längsseiten 2 der Trägerschicht 5 angeordnet. Bei der Ausführung nach den Fig. 7 bis 10 sind die Verstärkungsleisten 11 auf den Deckschichtstreifen 13 und 15 in etwa mittig aufgebracht. Die Fertigung des Wandelements 1 sowie die Funktion der Deckschichtstreifen 12 bis 16 und der Verstärkungsleisten 11 entsprechen dem, was vorstehend im Zusammenhang mit dem Wandelement 1 nach den Fig. 1 bis 4 ausgeführt wurde. Durch die insgesamt vier deckschichtfreien Trägerschichtabschnitte 17 der Ausführung nach den Fig. 7 bis 10 ist ein Durchbiegen des Wandelements 1 nach dem Trocknen der Kaschierung um eine Achse parallel zur Breitseite 3 praktisch verhindert.

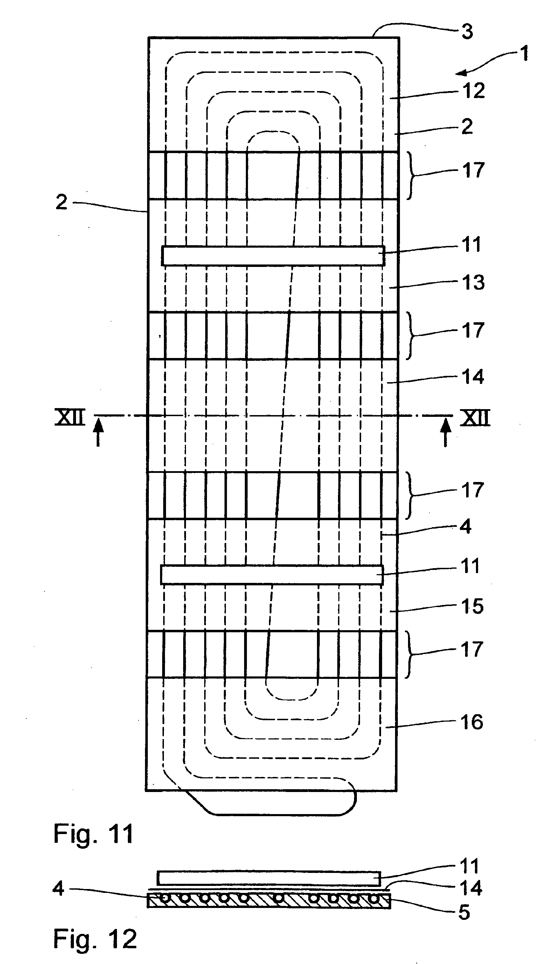

Fig. 11 und 12 zeigen eine weitere Ausführung eines Wandelements 1. Komponenten, die denjenigen entsprechen, die vorstehend schon unter Bezugnahme auf die Ausführungen nach den Fig. 1 bis 10 beschrieben wurden, tragen die gleichen Bezugsziffern und werden nicht nochmals im Einzelnen diskutiert.

Die Ausführung nach den Fig. 11 und 12 unterscheidet sich von derjenigen nach den Fig. 7 bis 10 lediglich durch die Breite des Wandelements 1, die bei der Ausführung nach den Fig. 11 und 12 620 mm beträgt. Entsprechend breiter sind bei der Ausführung nach den Fig. 11 und 12 die Trägerschicht 5, die Deckschichtsteifen 12 bis 16 und die beiden Verstärkungsleisten 11.

Bei den Ausführungen nach den Fig. 7 bis 12 können auch auf jedem der Deckschichtstreifen 12 bis 16 Verstärkungsleisten 11 aufkaschiert sein. Prinzipiell ist es auch möglich, auf jedem Deckschichtstreifen 8, 9 bzw. 12 bis 16 mehrere Verstärkungsleisten 11 aufzukaschieren.

## Patentansprüche

1. Wandelement (1) für eine Temperierwand zum Temperieren von Räumen
- mit mindestens einem Leitungselement (4) zur Aufnahme eines Temperierfluids,
- mit mindestens einer Trägerschicht (5) mit mindestens einer Nut (6), in der das Leitungselement (4) angeordnet ist,
- mit einer Deckschicht (7) zur Abdeckung der Nut (6),
wobei die Deckschicht (7) einen Bruchteil der Fläche der Trägerschicht (5) bedeckt und mindestens einen Deckschichtstreifen (8, 9; 12 bis 16) umfasst, der von einer Längsseite (2) der Trägerschicht (5) bis zu einer gegenüberliegenden Längsseite (2) der Trägerschicht (5) reicht und weniger als die Hälfte der Trägerschicht (5) überdeckt, **dadurch gekennzeichnet, dass** die Deckschicht (7) mindestens zwei voneinander getrennte Deckschichtstreifen (8, 9; 12 bis 16) umfasst, die
- von einer Längsseite (2) der Trägerschicht (5) bis zu einer gegenüberliegenden Längsseite (2) der Trägerschicht (5) reichen,
- voneinander durch einen deckschichtfreien Trägerschichtabschnitt (10; 17) beabstandet sind.

2. Wandelement nach Anspruch 1, **dadurch gekennzeichnet, dass** die Trägerschicht (5) rechteckig mit einer längeren Längsseite (2) und einer kürzeren Breitseite (3) ist, wobei der mindestens eine Deckschichtstreifen (8, 9; 12 bis 16) die gesamte Breitseite (3) der rechteckigen Trägerschicht (5) überdeckt.

3. Wandelement nach Anspruch 1, **gekennzeichnet durch** mehr als zwei, bevorzugt fünf, voneinander **durch** deckschichtfreie Trägerschichtabschnitte (17) getrennte Deckschichtstreifen (12 bis 16).

4. Wandelement nach einem der Ansprüche 1 bis 3, **dadurch gekennzeichnet, dass** mindestens zwei der Deckschichtstreifen (8, 9; 12, 16) auf den einander gegenüberliegenden Abschlussabschnitten der Längsseiten (2) der Trägerschicht (5) angeordnet sind.

5. Wandelement nach einem der Ansprüche 1 bis 4, **dadurch gekennzeichnet, dass** auf der von der Trägerschicht (5) abgewandten Seite mindestens eines Deckschichtstreifens (8, 9; 12 bis 16) mindestens eine Verstärkungsleiste (11) angebracht ist.

## Claims

1. Wall element (1) for a temperature-control wall for the temperature control of rooms,
- having at least one conduit element (4) for receiving a temperature-control fluid,
- having at least one carrier layer (5) with at least one groove (6) in which the conduit element (4) is arranged,
- having a cover layer (7) for covering the groove (6),
wherein the cover layer (7) covers a fraction of the surface of the carrier layer (5) and comprises at least one cover layer strip (8, 9; 12 to 16) which extends from a longitudinal side (2) of the carrier layer (5) to an opposite longitudinal side (2) of the carrier layer (5) and covers less than half the carrier layer (5), **characterized in that** the cover layer (7) comprises at least two cover layer strips (8, 9; 12 to 16) which are separated from one another and which
- extend from a longitudinal side (2) of the carrier layer (5) to an opposite longitudinal side (2) of the carrier layer (5),
- are spaced apart from one another by a cover layer-free carrier layer portion (10; 17).

2. Wall element according to Claim 1, **characterized in that** the carrier layer (5) is rectangular with a relatively long longitudinal side (2) and a relatively short broad side (3), wherein the at least one cover layer strip (8, 9; 12 to 16) covers the entire broad side (3) of the rectangular carrier layer (5).

3. Wall element according to Claim 1, **characterized by** more than two, preferably five, cover layer strips (12 to 16) which are separated from one another by cover layer-free carrier layer portions (17).

4. Wall element according to one of Claims 1 to 3, **characterized in that** at least two of the cover layer strips (8, 9; 12, 16) are arranged on the mutually opposite end portions of the longitudinal sides (2) of the carrier layer (5).

5. Wall element according to one of Claims 1 to 4, **characterized in that** at least one reinforcing strip (11) is mounted on the side of at least one cover layer strip (8, 9; 12 to 16) that faces away from the carrier layer (5).

## Revendications

1. Elément de paroi (1) pour une paroi de régulation thermique destinée à tempérer des locaux
- avec au moins un élément de conduite (4) destiné à contenir un fluide de régulation thermique,
- avec au moins une couche de support (5) présentant au moins une rainure (6), dans laquelle l'élément de conduite (4) est disposé,
- avec une couche de couverture (7) pour recouvrir la rainure (6),
dans lequel la couche de couverture (7) recouvre une fraction de la surface de la couche de support (5) et comprend au moins une bande de couche de couverture (8, 9; 12 à 16), qui s'étend d'un côté longitudinal (2) de la couche de support (5) jusqu'à un côté longitudinal opposé (2) de la couche de support (5) et qui recouvre moins que la moitié de la couche de support (5), **caractérisé en ce que** la couche de couverture (7) comprend au moins deux bandes de couche de couverture (8, 9; 12 à 16) séparées l'une de l'autre, qui
- s'étendent d'un côté longitudinal (2) de la couche de support (5) jusqu'à un côté longitudinal opposé (2) de la couche de support (5),
- et sont espacées l'une de l'autre par une partie de la couche de support (10; 17) sans couche de couverture.

2. Elément de paroi selon la revendication 1, **caractérisé en ce que** la couche de support (5) est rectangulaire avec un côté longitudinal plus long (2) et un côté transversal plus court (3), dans lequel ladite au moins une bande de couche de couverture (8, 9; 12 à 16) recouvre tout le côté transversal (3) de la couche de support rectangulaire (5).

3. Elément de paroi selon la revendication 1, **caractérisé par** plus de deux, de préférence cinq, bandes de couche de couverture (12 à 16) séparées l'une de l'autre par des parties de couche de support (17) sans couche de couverture.

4. Elément de paroi selon l'une quelconque des revendications 1 à 3, **caractérisé en ce qu'**au moins deux des bandes de couche de couverture (8, 9; 12 à 16) sont disposées sur les parties d'extrémité opposées l'une à l'autre des côtés longitudinaux (2) de la couche de support (5).

5. Elément de paroi selon l'une quelconque des revendications 1 à 4, **caractérisé en ce qu'**au moins une latte de renforcement (11) est placée sur le côté d'au moins une bande de couche de couverture (8, 9; 12 à 16) situé à l'opposé de la couche de support (5).
